Europäisches Patentamt

European Patent Office

Office européen des brevets

(19)

(11) Veröffentlichungsnummer: **0 278 363 B1**

(12) **EUROPÄISCHE PATENTSCHRIFT**

(45) Veröffentlichungstag der Patentschrift: **13.11.91**

(51) Int. Cl.⁵: **B29B 11/06, B29B 11/16**

(21) Anmeldenummer: **88101445.0**

(22) Anmeldetag: **02.02.88**

(54) **Verfahren und Vorrichtung zum bereitstellen faservertsärkter Thermoplastmasse für die Formteilherstellung.**

(30) Priorität: **13.08.87 DE 3726922**
**10.02.87 DE 3704037**

(43) Veröffentlichungstag der Anmeldung:
**17.08.88 Patentblatt 88/33**

(45) Bekanntmachung des Hinweises auf die
Patenterteilung:
**13.11.91 Patentblatt 91/46**

(84) Benannte Vertragsstaaten:
**AT BE CH DE ES FR GB IT LI LU NL SE**

(56) Entgegenhaltungen:
**DE-B- 1 242 853**    **DE-B- 1 247 002**
**FR-A- 2 212 225**    **US-A- 1 944 464**
**US-A- 2 210 004**    **US-A- 2 485 523**

(73) Patentinhaber: **Menzolit GmbH**
**Bahnhofstrasse 31**
**W-7527 Kraichtal-Menzingen(DE)**

(72) Erfinder: **Ehnert, Gerd**
**Brucknerstrasse 6**
**W-7523 Graben-Neudorf(DE)**
Erfinder: **von Paumgartten, Rolf**
**Spitzwegstrasse 6**
**W-6908 Wiesloch(DE)**

(74) Vertreter: **Dr.-Ing. Hans Lichti Dipl.-Ing. Heiner**
**Lichti Dipl.-Phys. Dr. Jost Lempert**
**Postfach 41 07 60 Durlacher Strasse 31**
**W-7500 Karlsruhe 41(DE)**

**Beschreibung**

Die Erfindung betrifft ein Verfahren zum Bereitstellen von auf herzustellende Formteile abgestimmten Chargen einer unter Erwärmung formbaren faserverstärkten Thermoplastmasse, wobei zunächst ein Vorprodukt aus Fasern und Thermoplast enthaltendem Bindemittel (Matrix) vorverdichtet wird, und einem Endlosstrang angefügt wird, wobei es über den Schmelzpunkt des Thermoplasts erhitzt wird, und wobei schließlich eine abgestimmte Charge vom Strangabgetrennt und einer Chargen-Weiterverarbeitung zugeführt wird und eine Vorrichtung zum Bereitstellen von auf zu fertigende Formteile abgestimmten Chargen einer formbaren faserverstärkten Thermoplastmasse, mit einer Schmelzeinrichtung, einer Vorkomprimierstation mit einem Verdichtungskanal sowie mit einem Schmelzkanal, durch den das zu verarbeitende Material als Endlosstrang hindurchgedrückt wird, insbesondere zur Durchführung des Verfahrens.

Als Verstärkungsfasern werden insbesondere geschnittene Glasfasern, aber auch andere mineralische, anorganische oder sonstige künstliche Fasern, wie Kohlefasern, Aramidfaser oder Polyesterfasern angesprochen. Soweit im Folgenden von Glasfasern gesprochen wird, können diese auch durch die vorgenannten Fasern ersetzt werden. Geschnittene Glasfasern werden in großem Umfang zur Herstellung von glasfaserverstärkten Kunststoffteilen verwendet. Die Glasfasern werden durch ein Bindemittel gebunden, welches als Kauptbestandteil oder Matrixeinen Thermoplasten, wie Polypropylen aufweist sowie zusätzlich Ruß, Wachs und sonstige Additive aufweisen kann. In der Praxis geschieht die Herstellung von in einer Presse zu einem Formteil preßbaren Halbzeug in einer Ausgestaltung durch Ausstreuen der Fasern zu einem Vlies und Imprägnieren desselben mit flüssigem Kunstharz. In einer anderen Ausgestaltung werden die Fasern in flüssiger Phase zu einer Aufschlämmung verarbeitet, die durch Rühr- oder Mischbewegungen zu einem Wirrfaserstoff verarbeitet wird. Auch hierbei werden flüssige Kunstharze oder pulvrige Bindemittel in Verbindung mit einer wässrigen Aufschlämmung eingesetzt. Im letztgenannten Fall wird die Aufschlämmung nach Bildung eines Wirrfaservlieses getrocknet. In beiden Fällen muß die Stärke und die Breite des Vlieses an die zu formenden Formteile angepaßt werden, ersteres notwendigerweise, letzteres um zu großen Abfall zu vermeiden. Weiterhin muß das Vlies anschließend in einzelne Platten in Anpassung an die herzustellenden Formteile geschnitten werden.

Es ist ferner vorgeschlagen worden (DE-A-36 04 888), flüssige Benetzungsmittel mit einem Anteil von maximal 20 Gew. -% zuzusetzen, um so eine feuchte, jedoch noch rieselförmige Masse zu erhalten, die als Zwischenprodukt in Kunststoffbeuteln verpackt an den Weiterverarbeiter weitergegeben oder ebenfalls in einer beheizten Bandpresse zu vorgeformten Plattenmaterial verarbeitet werden kann.

Insbesondere die erstgenannten Verfahren sind sehr aufwendig und erfordern erhebliche Investitionen. Bei allen vorgenannten Verfahren ist eine Konfektion des Halbzeugs erforderlich, was die Verfahren unflexibel macht und Anpassungen an andere Formteile verhindert bzw. erheblich erschwert.

Es wurde weiterhin schon vorgeschlagen, Glasfaserbündel zusammen mit den Thermoplast enthaltenen Bindemitteln in einer Wirbelkammer zu einem watteartigen Filz zu verwirbeln und anschließend entweder unter Vakuum zu packen, vorzugsweise in Kunststoffbeuteln aus mit dem Thermoplast des Bindemittels kompatiblem, insbesondere gleichem Material oder aber dieses direkt zur Weiterverarbeitung zur Verfügung zu stellen (DE-A-37 04 035).

Die FR-A-2 212 325 zeigt ein gattungsgemäßes Verfahren, bei dem einem Schneckenextruder über einen Trichter Granulatkörner oder Pellets, die aus Thermoplast, Bindemittel sowie Fasern bestehen, zugeführt, erhitzt, geschmolzen und mittels der Extruderschraube als Strang extrudiert werden. Dieser wird durch eine Schneideinrichtung in regelmäßige Abschnitte unterteilt, die einer Form zur Weiterverarbeitung zugeführt werden.

Die DE-B-12 47 002 zeigt eine gattungsgemäße Vorrichtung zum Strangpressen von profilierten Erzeugnissen aus einem Gemisch von zerkleinerten Spänen von Holzabfällen, landwirtschaftlichen Abfallprodukten und ähnlichem Rohgut mit Polymerbindemitteln. Die Vorrichtung weist eine senkrecht arbeitende Vorpreßstation auf, von der das Material in einen waagerechten Kanal mit einem waagerecht arbeitenden Preßstempel eingedrückt wird. Der letztgenannte Kanal ist mit Elektroheizelementen (Heizwendeln) versehen.

Der Erfindung liegt die Aufgabe zugrunde ein Verfahren und eine Vorrichtung zu schaffen, die ein schnelles und vollständiges Aufheizen erreichen und welche keine Konfektionierung des Ausgangsmaterials in Abhängigkeit von den herzustellenden Formteilen voraussetzen.

Das erfindungsgemäße Verfahren ist dadurch gekennzeichnet, daß das vorverdichtete Vorprodukt durch Heißgas über sein Volumen hin erhitzt wird. Eine erfindungsgemäße Vorrichtung, insbesondere zur Durchführung des Verfahrens, zeichnet sich dadurch aus, daß in den Verdichtungskanal Vakuumleitungen münden, daß dem Schmelzkanal eine Heißgasstation vorgeschaltet ist und daß eine Dosierstation vorgesehen ist.

Das erfindungsgemäße Verfahren ermöglicht eine Vereinfachung des Herstellungsablaufs sowie einen hohen Automatisierungsgrad bei der Formteilherstellung. Es ist keine Konfektionierung des Ausgangsprodukts erforderlich. Die Investitionskosten können niedrig gehalten werden. Durch die Ausbildung als geschlossenes System der erfindungsgemäßen Vorrichtung kann eine Zersetzung der Thermoplast-Matrix durch Überhitzung ausgeschlossen werden, wodurch eine verminderte Brandgefahr und eine erhöhte Umweltfreundlichkeit gegeben ist. Das erfindungsgemäße Verfahren ermöglicht große Variationsmöglichkeiten hinsichtlich des Einsatzes von höherwertigen Thermoplasten (z.B. PA, PTP), der Verwendung unterschiedlicher Verstärkungsfasern und der Veränderung des Chargen-Volumens für das Formteil an der Presse, so daß die erfindungsgemäße Vorrichtung mittels des Verfahrens zur Bereitstellung Chargen für mehrere sich anschließende unterschiedliche, auch hinsichtlich der Chargenmenge unterschiedliche Formteile herstellende Pressen eingesetzt werden kann.

Insbesondere kann das Ausgangsmaterial in schüttfähiger Form in einer Standartpaketgröße, wie einem Vakuumbeutel oder auch als formhaltiges, vorverdichtetes Halbzeug zugeführt werden und muß nicht, wie dies bei der Glasmattenherstellung erforderlich ist, nach den speziellen Einsatzgewichten etc. der Formteile angepaßt sein. Die zur Dosierung am Ende des erfindungsgemäßen Verfahrens bzw. am Ausgang der erfindungsgemäßen Vorrichtung kann dann genau auf das herstellende Formteil vorgenommen und auch von einer zur anderen Charge verändert werden, so daß sich mehrere Pressen, die unterschiedliche Formteile, auch mit unterschiedlichen Gewichten herstellen, unmittelbar anschließen können und wechselweise durch die Dosierstation versorgt werden.

Eine bevorzugte Ausgestaltung der Erfindung sieht vor, daß das Vorprodukt vorverdichtet und unmittelbar dem Endlosstrang zugeführt wird bzw. daß der Schmelzeinrichtung eine Komprimierstation mit einem gemeinsamen Kanal für das zu verarbeitende Material vorgeschaltet ist, wobei gemäß einer Weiterbildung weiterhin vorgesehen sein kann, daß die Komprimierstation einen gekühlten Verdichtungskanal aufweist, an den dann der Schmelzkanal der Schmelzeinrichtung anschließt und daß an dem der Übergangsstelle von Verdichtungskanal und Schmelzkanal angewandten Ende des Verdichtungskanals ein Verdichtungs- und Förderkolben bewegbar angeordnet ist und insbesondere, daß der Schmelzkanal der Schmelzeinrichtung über seine gesamte Länge von Heizelementen umgeben ist. Der Dosierkolben der Dosiereinrichtung kann gleichzeitig der Förderkolben zum Hindurchfördern des erweichten Materials durch die Schmelzeinrichtung sein. In bevorzugter Ausgestaltung ist vorgesehen, daß bei der Verdichtung des Ausgangsmaterials Vakuum angelegt wird, um so Lufteinschlüsse und dergleichen zu vermeiden. Hierzu könnten insbesondere im Bereich der Komprimierstation, Vakuumleitungen, über die das vakuum angelegt wird. Gemäß einer bevorzugten Ausgestaltung ist der Schmelzkanal über seine gesamte Länge mit Heizelementen versehen. Die Erwärmung des Materials im Schmelzkanal erfolgt auf eine Temperatur, die höher als die Schmelztemperatur des Thermoplasts des Materials ist und insbesondere 40 bis 100 Grad C über der Schmelztemperatur liegt. Das erfindungsgemäße Verfahren erlaubt einen sehr hohen Durchsatz an zu erweichendem und zu dosierendem Material, so ist ein Durchsatz von 2 kg oder mehr pro Minute ohne weiteres erreichbar. Soweit der Heizkanal eine erhebliche Länge, aufweist, so ist er vorzugsweise in Schlaufen verlegt, um so die Gesamtlänge der Vorrichtung zu verkürzen.

Um den von Heizelementen, beispielsweise elektrischen Heizwicklungen umgebenen eigentlichen Schmelzkanal, in dem das zu verarbeitende Material pastös-flüssig gehalten wird, möglichst kurz zu gestalten ist in bevorzugter Ausgestaltung vorgesehen, daß das verdichtete Vorprodukt durch Heißgas über sein gesamtes Volumen erhitzt wird bzw. daß das Halbzeug durch Heißgas zumindestens in seinem fasrigen Kernbereich erhitzt wird. Wenn schüttfähiges Produkt zugeführt wird, kann zwischen der Kühlstation, durch welche verhindert wird, daß das Material am Komprimierkolben klebt und der von Heizelementen umgebenen Komprimierkammer eine Heißluftstation vorgesehen sein, die derart ausgebildet ist, daß ein entsprechender Kanalbereich, durch welchen das Material gedrückt wird von einem Metallfilter umgeben ist, das die Wandung des Bereichs bildet und durch dessen Öffnungen radial heißes Gas, insbesondere inertes heißes Gas, wie Stickstoff oder Helium, soweit das Polymer nicht angegriffen wird, auch Heißluft hindurchgetrieben wird, die das in diesem Bereich befindliche Material über seinen gesamten Querschnitt und damit dessen gesamtes Volumen bis oberhalb des Schmelzpunktes des Polymers erhitzt.

Eine andere Ausgestaltung sieht vor, daß vorverdichtetes, formhaltiges Halbzeug zugeführt wird. Hierbei kann insbesondere Halbzeug mit einem starren Außenmantel und einem inneren filzartigen Kern aus Glasfaser-Polymer-Körnchengemisch zugeführt werden. Das Polymer kann dabei insbesondere in Staub- oder Körnchenform vorliegen. Ein solches maßhaltiges Halbzeug kann durch kurzzeitige sehr hohe Erhitzung eines Mantelbereichs von filzartigem Ausgangsmaterial in verdichtetem Zustand erzeugt werden.

Um auch in diesem Falle die Schmelzkammer relativ kurz ausbilden zu können, ist vorgesehen, daß dem Schmelzkanal eine Heißluftstation vorgeschaltet ist. In diesem Falle ist die Heißluftstation vor einem Einlaß zur Komprimier- und Schmelzstation angeordnet. Sie kann insbesondere eine Temperierkammer aufweisen, die durch vorzugsweise zwei verschiebliche Kolben oder aber durch andere geeignete Vorrichtungen begrenzt wird, durch die das maßhaltige Halbzeug von einer Zuführöffnung zu einer Auslaßöffnung zur Komprimier- und Schmelzstation bewegt wird. In den beiden Kolben sind Öffnungen vorgesehen, durch die Heißluft axial hindurch in den Bereich zwischen den beiden Kolben und durch den filzartigen Kernbereich des Halbzeugs hindurchgeblasen wird um das Halbzeug hier bis auf eine Temperatur wenig unterhalb der Schmelztemperatur zu erhitzen. Mit einer solchen Temperatur wird das Halbzeug dann weiter zum vollständigen Schmelzen und Dosieren gefördert, wie dies oben ebenfalls erläutert wurde. Auch hierdurch kann der durch Heißelemente umgebene eigentliche Schmelzkanal wesentlich verkürzt werden.

Weitere Vorteile und Merkmale der Erfindung ergeben sich aus den Ansprüchen und aus der nachfolgenden Beschreibung, in der ein Ausführungsbeispiel der erfindungsgemäßen Vorrichtung zum Bereitstellen einer abgestimmten menge einer formbaren faserverstärkten Thermoplastmasse unter Bezugnahme auf die Zeichnung im einzelnen erläutert ist. Dabei zeigt:

Fig. 1    Eine schematische Darstellung einer ersten Ausführungsform der erfindungsgemäßen Vorrichtung in Seitenansicht;

Fig. 2    eine Tempereriereinrichtung für formhaltiges Halbzeug als Teil einer zweiten Ausführungsform der erfindungsgemäßen Vorrichtung; und

Fig. 3    die wesentlichen Teile einer zweiten Ausführungsform der erfindungsgemäßen Vorrichtung.

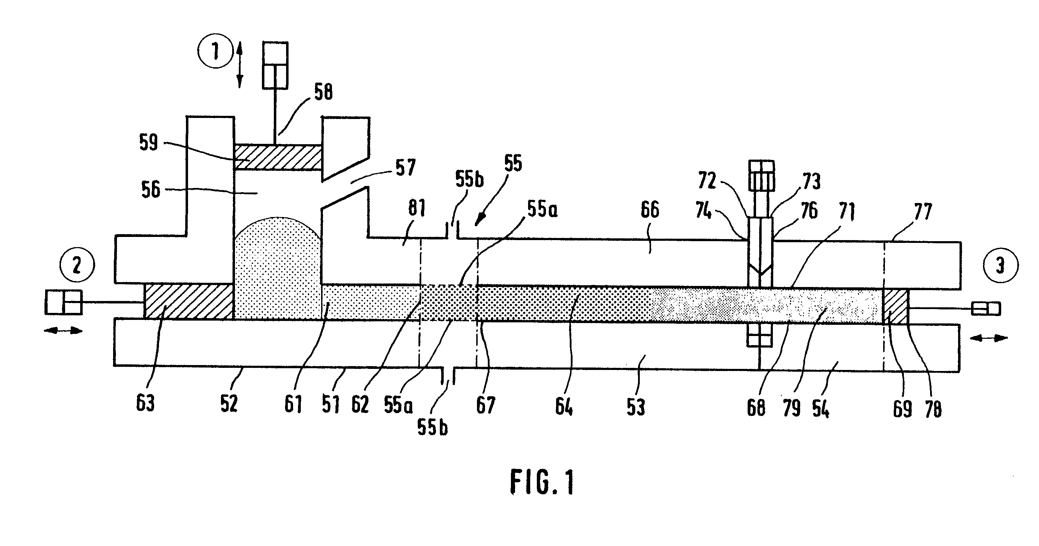

Die erfindungsgemäße Vorrichtung 51 zur Bereitstellung einer auf das zu fertigende Formteil abgestimmten Menge einer formbaren faserverstärkten Thermoplastmasse weist eine Komprimierstation 52, eine Heißgasstation 55, einen Schmelzkanal 64 und eine Dosierstation 54 auf. Die Komprimierstation 52 weist eine Aufnahme- und Vorverdichtungskammer 56 auf, in die ein Zuführkanal 57 mündet und die als Kolben- und Zylindereinheit 58 mit einem Vorverdichtungskolben 59 versehen ist. Der Kolben 59 kann in geeigneter Weise, insbesondere hydraulisch angetrieben werden. In ihrem dem Kolben 59 abgewandten Endbereich 61 geht die Zuführ- und Vorverdichtungskammer 56 in eine Verdichtungskammer 62 über. Die Verdichtungskammer 62 weist einen Verdichtungs- und Vorschubkolben 63 auf, der ebenfalls in geeigneter Weise, vorzugsweise hydraulisch beaufschlagt wird. Die Verdichtungskammer 62 ist zunächst mit einem Kühlbereich 81 versehen, bei dem um den Kanal herum Kühlelemente vorgesehen sind, um ein Verbleiben des Materials mit dem Vorschubkolben 63 zu verhindern. An den Kühlbereich 81 schließt sich im dargestellten Ausführungsbeispiel der Fig. 1 eine Heißgasstation 55 an. Diese weist die Kammer oder den Kanal umgebende Mantelwände auf einem Metallfilter 55 sowie Heißgasanschlüsse 55a auf. Hierdurch kann Heißluft radial durch das verdichtete filterartige Material geblasen werden. Durch diese Heißgaserhitzung kann die Länge des anschließenden durch Heizelemente 66 angebenden Schmelzkanals 54 wesentlich verkürzt werden. Zur Erhitzung werden insbesondere inerte Gase wie Stickstoff oder Helium eingesetzt, die ggfls. im geschlossenen Kreislauf durch das Material geblasen werden. Bei unproblematischen Bindemitteln (einschl. der enthaltenen Thermoplasten) kann auch Heißluft verwendet werden. Die Erhitzung erfolgt vorzugsweise schon durch das Heißgas bis über die Schmelztemperatur, beispielsweise mit 240 Grad C.

An die kanalartig ausgebildete Verdichtungskammer 62 schließt sich ein Schmelzkanal 64 der Schmelzeinrichtung 53 an. Der Schmelzkanal 64 ist durch Heizelemente 66 umgeben, mittels derer das in ihm befindliche faserverstärkte Thermoplastmaterial 67 bis zur Schmelztemperatur erwärmt wird.

An die Schmelzeinrichtung schließt sich die schon erwähnte Dosierstation 54 an, die eine Dosierkammer 68 aufweist, in der ein Dosier- und Ausstoßkolben 69 bewegbar ist, der ebenfalls vorzugsweise hydraulisch beaufschlagt wird. Der Dosierund Ausstoßkolben 69 wirkt dem Verdichtungs- und Vorschubkolben 63 entgegen. Schmelzeinrichtung 53 und Dosierstation 54 sind an ihrem - dem Kolben 69 abgewandten - Berührungsbereich 71 mit Trenneinrichtungen 72 und 73 versehen, die jeweils vorzugsweise hydraulisch betätigte Trennschieber 74, 76 aufweisen. Die Trenneinrichtung 72 ist mit der Schmelzeinrichtung 53 verbunden, die vorzugsweise stationär angeordnet ist. Die Trenneinrichtung 73 ist mit der Dosierstation 54 verbunden, die mit ihren dem Ende der Schmelzeinrichtung 53 zugewandten Bereich 71 von der Schmelzeinrichtung 53 fortbewegbar, vorzugsweise um eine senkrechte Achse 77 verschwenkbar angeordnet ist. Die Dosierstation 54 weist ebenfalls Heizeinrichtungen 78 auf, die die in ihr befindliche Charge 79 des faserverstärkten Thermoplasts in einem geeigneten plastischen Zustand halten.

Durch den Zuführkanal 57 wird das Rohstoffhalbzeug zugeführt. Dies kann portionsweise geschehen, indem durch den Zuführkanal 57 in die Vorverdichtungskammer 56 eine bestimmte Menge an Material eingefüllt und dieses dann durch den Vorverdichtungskolben 59 vorverdichtet wird. Vor dem Zuführkanal 57 kann ein Bunker vorgeordnet sein, in dem sich das zu verarbeitende Material beispielsweise in schüttfähiger Form befindet. In diesem Falle wird vorzugsweise am Ende des Zuführkanals noch ein Sperrschieber vorgesehen. Das zu verarbeitende Material ist ein mit Glasfasern beladener Thermoplast, der entweder schüttfähig oder in geeigneter Portionen vorliegt. Er kann in weitgehend beliebiger Weise hergestellt sein, beispielsweise in herkömmlicher Art, dem zunächst ein Vlies, das mit flüssigem Kunstharz imprägniert wurde oder eine durch Aufschlämmung und Trocknung hergestelltes Vlies sein. Es kann sich um eine in Kunststoffbeuteln feucht verpackte, noch rieselfähige Masse handeln (Patentanmeldung P 36 04 888.7). Es kann sich um durch Verwirbelung von Fasern und Thermoplast enthaltendes Bindemittel hergestelltes watteartiges Filzmaterial handeln, das der erfindungsgemäßen Vorrichtung direkt von der Wirbelkammer zugeführt wird, oder das nach Abpackung ebenfalls in Kunststoffbeuteln bereitgestellt wird. Es kann vorgesehen sein, daß das Zwischenprodukt, soweit es in Kunststoffbeuteln vorliegt, durch Öffnen, wie Aufschneiden derselben, aus diesen ausgeschüttet zugeführt wird. Bevorzugter Weise werden aber Kunststoffbeutel aus einem Material verwendet, das mit dem Thermoplast des Bindemittels des Werkstoffes kompatibel ist, insbesondere das gleiche Material ist. In diesem Falle kann das Material mit samt den Kunststoffbeuteln direkt über den Zuführkanal 57 der Aufnahme- und Vorverdichtungskammer 56 zugeführt werden.

Nach Zuführung in die Aufnahme- und Vorverdichtungskammer 56 wird das Material, wie schon erwähnt, mittels des Kolben 59 vorverdichtet und in den Verdichtungskanal 62 eingedrückt. Der Kolben 59 bleibt in seiner unteren Stellung, die mit der oberen Begrenzungswand des Kanals 62 schließt, stehen. Anschließend übernimmt der Kolben 63 die Hauptverdichtung des Materials, indem er in Richtung des Schmelzkanals bewegt wird und einerseits das Material weiter verdichtet, andererseits das Material in und durch den Schmelzkanal 64 bewegt. Bei dieser Hauptverdichtung wird gleichzeitig an den Verdichtungskanal 62 Vakuum angelegt, um Lufteinschlüsse zu vermeiden.

Gleichzeitig wird das im Schmelzkanal 64 erwärmte Material bei geöffneten Trenneinrichtungen 72, 73 in die leere Dosierstation 54 eingeschoben, wobei in der Dosierstation der Dosier-und Ausschubkolben 69 mit einstellbarem Gegendruck nach rechts verschoben wird, bis die gewünschte Volumenmenge in der Dosierstation vorhanden ist, die für die herstellung eines speziellen Formteils benötigt wird. Sodann werden die Trennschieber 74, 76 geschoben und Trennen das Material 79 in der Dosierstation vom Material 67 in der Schmelzeinrichtung 53 ab. In der Dosierstation 54 kann das zähflüssige Material 59 auf geeigneter höherer Temperatur gehalten werden, bis der Abruf von der Presse zur Formung eines neuen Formteils erfolgt. In diesem Falle schwenkt die Dosierstation 54 seitwärts um die Achse 77. Der Trennschieber 76 wird wieder geöffnet und der Kolben 69 drückt die volumendosierte Masse 79 in der Zeichnung nach links heraus, beispielsweise direkt in die Presse oder auf eine Aufnahme zur Aufnahme der Masse 79. Soweit die Masse lediglich zähplastisch ist, kann sie auch direkt, beispielsweise von einem Roboterarm ergriffen werden. In den beiden letztgenannten Fällen wird die Masse dann anschließend zur Presse übertragen. In der Presse können sie dann grundsätzlich in ansich bekannter Weise zum Formteil weiterverarbeitet werden.

Grundsätzlich kann das verdichtete und in der Dosierstation 54 dosierte Formteil auch nach Ausstoß abgekühlt und zwischengelagert werden. Insbesondere in diesem Falle wird man vorsehen, daß zumindestens die Dosierkammer einen Querschnitt aufweist, der die Herstellung weitgehend plattenförmiger Formteile ermöglicht.

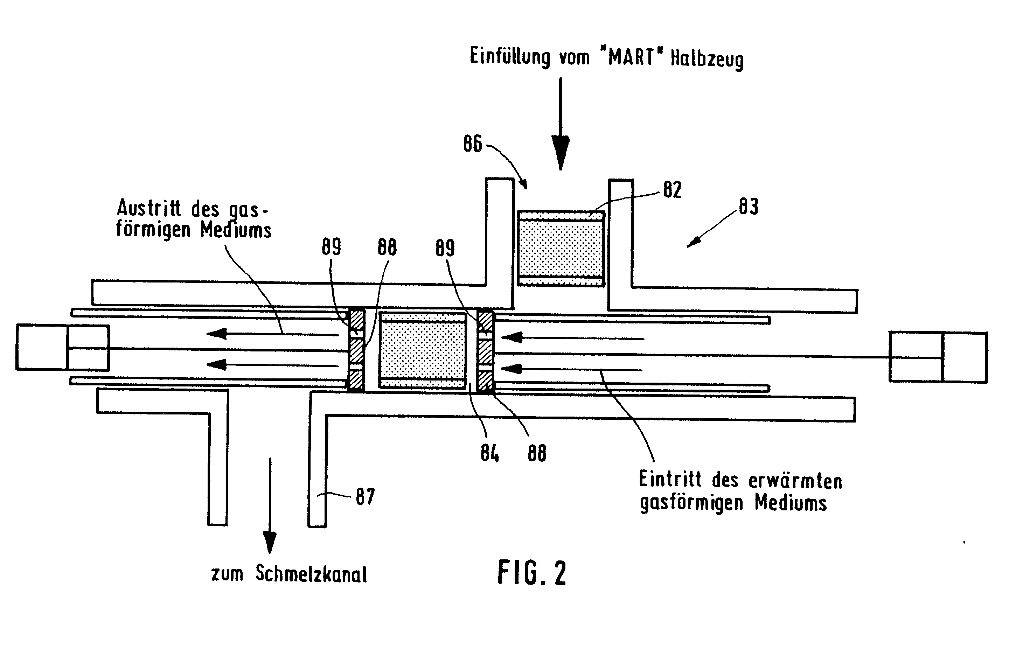

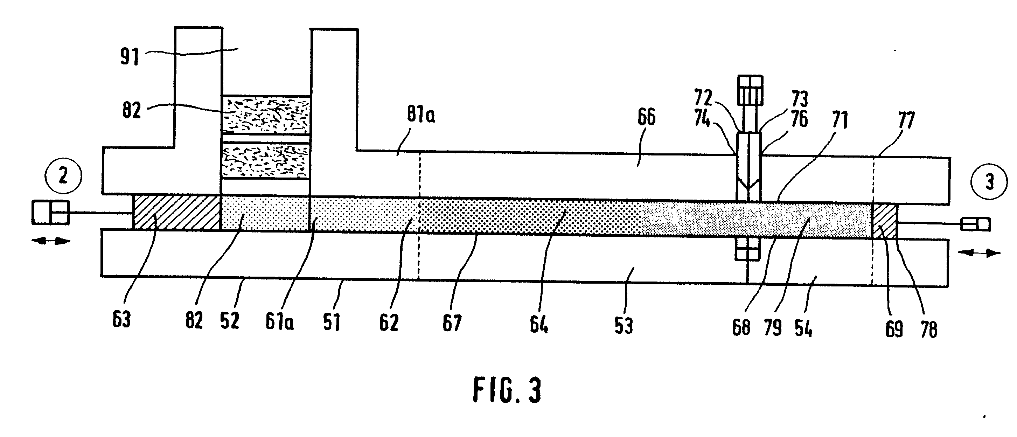

Bei der Ausgestaltung der Figuren 2 und 3 wird ein formhaltiges Halbzeug in Form beispielsweise eines Zylinders, Rechteck oder Quaders zugeführt, dessen Mantelwände aus geschmolzenem und wiedererstarrtem Thermoplast, in denen die Fasern enthalten sind besteht, während der Kern aus dem unverschmolzenem filzartigen, aber verdichteten Gemisch aus Fasern und Bindemittel, das Polymer, Pulver oder Körnchen enthält, besteht. Die Stirnseiten sind offen, d.h. hier ist der Glasfaser-Bindemittelfilz sichtbar, sie sind nicht verschmolzen. Derartiges Halbzeug kann beispielsweise durch kurze hohe Erhitzung nur des Oberflächenbereichs einer verdichteten Materialportion erhalten werden.

Das Halbzeug 82 wird zunächst der in der Figur 2 dargestellten Heißgasstation 83 zugeführt. Diese weist eine gestreckte Temperierkammer 84 auf, deren Querschnitt dem Querschnitt des Halbzeugs 82 entspricht. Die Temperierkammer 84 ist seitlich mit einem Einlaß 86 und im dargestellten Ausführungsbeispiel versetzt zu diesen mit einem Auslaß 87 versehen. Einlaß und Auslaß könnten grundsätzlich auch fluchten. In diesem Falle müßten sie nach Einfüllen eines Halbzeugteils mit Schiebern gasdicht abgeschlossen werden.

Bei der dargestellten Ausführungsform sind weiterhin in der Temperierkammer zwei Kolben 88 geführt, die jeweils Öffnungen 89 zum Durchlaß heißen Gases aufweisen. Auch hier können die o.g. heißen inerten Gase oder gegebenenfalls heiße Luft verwendet werden; soweit sinnvoll, werden die Gase in geschlossenen Kreislauf geführt.

Zunächst wird ein Halbzeug durch den Einlaß 86 bei nach rechts zurückgezogenem rechten Kolben in den Kanal eingeführt und anschließend durch den rechten Kolben nach links in die Temperierzone verschoben. Sodann wird durch die Durchbrüche eines Kolbens Heißgas oder Heißluft in die das Halbzeug 82 enthaltende Kammer ein und durch dieses hindurchgeblasen und kann durch die Öffnung des anderen Kolbens austreten. Der filzartige Kern des Halbzeugs 82 wird dabei auf eine Temperatur erwärmt, die knapp unterhalb der Schmelztemperatur liegt, beispielsweise bis auf 150 Grad. Anschließend wird das Halbzeug durch Zurückziehen des linken Kolbens und Vorschieben des rechten Kolbens über den Auslaß 87 gebracht und kann durch diesen zum Einlaß 91 der Komprimier- und Dosierstation, wie sie in Figur 3 dargestellt ist, überführt werden. Die erhitzten Halbzeug-Zylinder sind auch dort mit dem Bezugszeichen 82 bezeichnet.

Die Dosier- und Komprimierstation der Figur 3 ist bis auf den unterschiedlichen Einlaßbereich 91, der als Kanal zur Zuführung des Halbzeugs 82 ausgebildet ist und keinen Schütteinlaß für das schüttfähige Vorprodukt sowie keinen Komprimierkolben aufweist, grundsätzlich gleich bzw. sehr ähnlich der Ausgestaltung der Figur 1 ausgebildet. Aufgrund der unter Bezugnahme auf die Figur 2 beschriebenen Temperierung oder Vorerwärmung des filzartigen Kerns des Halbzeugs 82 ist die Heißluftstation 55 der Figur 1 zwischen Kühlstation 81 und mit Heizelementen 66 versehenem Schmelzkanal 64 nicht mehr erforderlich; aufgrund der Vorerhitzung kann dennoch ein relativ kurzer Schmelzkanal 64 eingesetzt werden.

Dem eigentlichen Schmelzkanal 64 ist ein Temperierbereich 81a vorgeschaltet, der das in diesem Bereich eingeschobene Halbzeug 82 zuverlässig auf einer Temperatur knapp unterhalb der Schmelztemperatur hält, so daß auch hier ein Verkleben des Kolbens 63 vermieden wird.

Die Halbzeugzylinder werden durch den Zuführkanal 91 von der Temperierstation 83 zugeführt und gelangen von der Seite her in den Vorverdichtungsbereich 61. Durch den Kolben 63 wird ein Halbzeugzylinder 62 von der Öffnung des Zuführkanals 91 fortgeschoben. Durch Zurückziehen des Kolbens kann der nächste Zylinder vor den zurückgezogenen Kolben 63 fallen, der dann weiter vorgeschoben wird. Die Zylinder werden dann dem Verdichtungskanal 62 in den Schmelzkanal 54 eingedrückt, wo sie nun auf eine Temperatur oberhalb der Schmelztemperatur des Thermoplasten erhitzt werden und ihre Individualität verlieren, so daß ein flüssiger oder pastöser Endlosstrang aus Glasfasern und flüssigen Bindemittel mit Polymeranteil besteht. Bei dieser Hauptverdichtung kann wiederum gleichzeitig an den Verdichtungskanal 62 Vakuum angelegt werden, um Lufteinschlüsse zuverlässig auszuschließen.

Die weitere Verarbeitung geschieht dann in der oben unter Bezugnahme auf die Figur 2 beschriebenen Weise bis die Masse von der Dosierstation beispielsweise in einer Presse zur Formung eines Formteils abgegeben wird, so daß hierauf verwiesen werden kann.

## Patentansprüche

1. Verfahren zum Bereitstellen von auf herzustellende Formteile abgestimmten Chargen einer unter Erwärmung formbaren faserverstärkten Thermoplastmasse, wobei zunächst ein Vorprodukt aus Fasern und Thermoplast enthaltendem Bindemittel (Matrix) vorverdichtet wird, und einem Endlosstrang angefügt wird, wobei es über den Schmelzpunkt des Thermoplasts erhitzt wird, und wobei schließlich eine abgestimmte Charge vom Strang abgetrennt und einer Chargen-Weiterverarbeitung Zugeführt wird, dadurch gekennzeichnet, daß das vorverdichtete Vorprodukt durch Heißgas über sein Volumen hin erhitzt wird.

2. Verfahren nach Anspruch 1, dadurch gekennzeichnet, daß das Vorprodukt in Portionen zugeführt wird, deren Größe nicht der abgestimmten Chargen-Menge für das zu fertigende Formteil entspricht.

3. Verfahren nach einem der Ansprüche 1 bis 2, dadurch gekennzeichnet, daß das Vorprodukt als watteartiger Filz zugeführt wird.

4. Verfahren nach einem der Ansprüche 1 bis 3, dadurch gekennzeichnet, daß das Vorprodukt durch Heißgas bis über den Schmelzpunkt seines Polymers erhitzt wird.

5. Verfahren nach einem der Ansprüche 1 bis 4, dadurch gekennzeichnet, daß das Vorprodukt als schüttfähiges Vorprodukt zugeführt wird.

6. Verfahren nach einem der Ansprüche 1 bis 5, dadurch gekennzeichnet, daß das Vorprodukt in Beuteln aus mit dem Thermoplast des Bindemittels kompatiblem, insbesondere gleichem Material als verpackte, filzartige Portionen zugeführt wird.

7. Verfahren nach einem der Ansprüche 1 bis 4, dadurch gekennzeichnet, daß vorverdichtetes, formhaltiges Halbzeug zugeführt wird.

8. Verfahren nach Anspruch 7, dadurch gekennzeichnet, daß das Halbzeug mit einem starren Außenmantel aus geschmolzenem und wieder erhärtetem Polymer-Fasergemisch und einem inneren Kern aus filzartigen Faser-Polymer-Pulvergemisch zugeführt wird.

9. Verfahren nach Anspruch 7 oder 8, dadurch gekennzeichnet, daß das Halbzeug durch Heißgas zumindestens in seinem fasrigen Kernbereich erhitzt wird.

10. Verfahren nach Anspruch 9, dadurch gekennzeichnet, daß der Kern des Halbzeugs durch Heißgas schon bis zu 100 °C über die Schmelztemperatur des Polymers erhitzt wird.

11. Verfahren nach Anspruch 9 oder 10, dadurch gekennzeichnet, daß das Gas axial durch den filzartigen Kern des Halbzeugs geblasen wird.

12. Verfahren nach einem der Ansprüche 1 bis 11, dadurch gekennzeichnet, daß als Heißgas ein inertes Gas, wie Stickstoff oder Helium verwendet wird.

13. Verfahren nach einem der Ansprüche 1 bis 11, dadurch gekennzeichnet, daß als Heißgas Heißluft eingesetzt wird.

14. Verfahren nach einem der vorangehenden Ansprüche, dadurch gekennzeichnet, daß die vom Strang abgeschnittenen Chargen volumetrisch dosiert werden.

15. Vorrichtung zum Bereitstellen von auf zu fertigende Formteile abgestimmten Chargen einer formbaren faserverstärkten Thermoplastmasse, mit einer Schmelzeinrichtung, mit einer Vorkomprimierstation, mit einem Verdichtungskanal sowie mit einem Schmelzkanal, durch den das zu verarbeitende Material (57) als Endlosstrang hindurchgedrückt wird, insbesondere zur Durchführung des Verfahrens nach einem der vorangehenden Ansprüche, dadurch gekennzeichnet, daß in den Verdichtungskanal Vakuumleitungen münden, daß dem Schmelzkanal (64) eine Heißgasstation (55, 84) vorgeschaltet ist und daß eine Dosierstation (54) vorgesehen ist.

16. Vorrichtung nach Anspruch 15, dadurch gekennzeichnet, daß der Schmeleinrichtung (53) eine Komprimierstation (51) mit einem gemeinsamen Förderkanal für das zu verarbeitende Material vorgeschaltet ist.

17. Vorrichtung nach Anspruch 16, dadurch gekennzeichnet, daß die Komprimierstation (51) einen Verdichtungskanal (62) aufweist, an den der Schmelzkanal (64) der Schmelzeinrichtung (53) anschließt und daß an dem der Übergangsstelle von Verdichtungskanal (62) und Schmelzkanal (64) abgewandten Ende des Verdichtungskanals (62) ein Verdichtungsund Förderkolben (63) bewegbar angeordnet ist.

18. Vorrichtung nach Anspruch 16 oder 17, dadurch gekennzeichnet, daß die Komprimierstation (51) eine Aufnahme-und Vorverdichtungskammer (56) aufweist, in die ein Zuführkanal (57) führt und in der ein Vorverdichtungskolben (59) derart beweglich ist, daß er das zugeführte Material in einen sich mit dem Verdichtungskanal (62) überschneidenden Bereich (61) der Vorverdichtungskammer (56) eindrückt.

19. Vorrichtung nach einem der Ansprüche 15 bis 18, dadurch gekennzeichnet, daß der Schmelzkanal (64) der Schmelzeinrichtung (53) über seine gesamte Länge von Heizelementen (66) umgeben ist.

20. Vorrichtung nach einem der Ansprüche 18 bis 19, dadurch gekennzeichnet, daß in der Komprimierstation (51) zur Vermeidung von Anhaften der Schmelze am Verdichtungsund Förderkolben (63) Kühlelemente (81) vorgesehen sind.

21. Vorrichtung nach einem der Ansprüche 15 bis 20, dadurch gekennzeichnet, daß die Dosierstation (54) einen in seiner Füllposition einstellbaren Dosierkolben (78) aufweist.

22. Vorrichtung nach einem der Ansprüche 15 bis 21, dadurch gekennzeichnet, daß zwischen Schmelzeinrichtung (53) und Dosierstation (54) Trenneinrichtungen (72, 73) vorgesehen sind.

23. Vorrichtung nach Anspruch 22, dadurch gekennzeichnet, daß die Dosierstation mit dem ihren Kolben (69) abgewandten an den Schmelzkanal (64) anschließenden Beginn (73) ihres Dosierkanals von der Schmelzeinrichtung (53) fortbewegbar ist.

24. Vorrichtung nach einem der Ansprüche 15 bis 23, dadurch gekennzeichnet, daß in den Verdichtungskanal (62) Vakuumleitungen münden.

25. Vorrichtung nach einem der Ansprüche 15 bis 23, dadurch gekennzeichnet, daß dem Schmelzkanal (64) eine Heißluftstation (55, 84) vorgeschaltet ist.

26. Vorrichtung nach Anspruch 25, dadurch gekennzeichnet, daß der Förderkanal für das zu schmelzende Produkt durch einen Metallfilter umgeben ist, durch welches heißes Gas radial durch den Kanal und das in ihm befindliche faserartibe Produkt blasbar ist.

27. Vorrichtung nach Anspruch 25, dadurch gekennzeichnet, daß die Heißgasstation (83) einer Zuführöffnung (91) zur Schmelz- und Dosierstation vorgeschaltet ist.

28. Vorrichtung nach Anspruch 27, dadurch gekennzeichnet, daß die Heißgasstation (83, 84) Schieberkolben (88) mit Durchbrüchen (89) aufweist, durch die heißes Gas in ein Halbzeug (82) aufnehmende heiße Kammer axial hindurchblasbar ist.

## Claims

1. Method for preparing batches, matched to the moulded articles to be manufactured, of a fibre-reinforced thermoplastic material mouldable by heating, in which initially a preliminary product of fibres and thermoplastic-containing binder (matrix) is precompressed and attached to an endless strand, is heated to above the melting point of the thermoplastic and finally a matched batch is separated from the strand and supplied to a batch further processing means, characterized in that the precompressed preliminary product is heated over its volume by hot gas.

2. Method according to claim 1, characterized in that the preliminary product is supplied in portions, whose size does not correspond to the matched batch quantity for the moulded article to be manufactured.

3. Method according to one of the claims 1 or 2, characterized in that the preliminary product is supplied as cottonwool-like felt.

4. Method according to one of the claims 1 to 3, characterized in that the preliminary product is heated by hot gas to above the melting point of its polymer.

5. Method according to one of the claims 1 to 4, characterized in that the preliminary product is supplied as pourable preliminary product.

6. Method according to one of the claims 1 to 5, characterized in that the preliminary product is supplied as felt-like portions packed in bags compatible with the thermoplastic of the binder and in particular of the same material.

7. Method according to one of the claims 1 to 4, characterized in that precompressed, dimensionally stable semifinished product is supplied.

8. Method according to claim 7, characterized in that the semifinished product is supplied with a rigid outer jacket of a melted and rehardened polymer-fibre mixture and an inner core of felt-like fibre-polymer-powder mixture.

9. Method according to claims 7 or 8, characterized in that the semifinished product is heated by hot gas at least in its fibrous core region.

10. Method according to claim 9, characterized in that the core of the semifinished product is heated by hot gas up to 100°C above the melting point of the polymer.

11. Method according to claims 9 or 10, characterized in that the gas is blown axially through the felt-like core of the semifinished product.

12. Method according to one of the claims 1 to 11, characterized in that an inert gas, such as nitrogen or helium is used as the hot gas.

13. Method according to one of the claims 1 to 11, characterized in that hot air is used as the hot gas.

14. Method according to one of the preceding claims, characterized in that the batches cut from the strand are volumetrically dosed.

15. Apparatus for preparing batches, matched to the moulded articles to be manufactured, of a mouldable, fibre-reinforced thermoplastic material, with a melting means, with a precompression station, with a precompression channel and with a melting channel through which the material (57) to be processed is forced as an endless strand, particularly for performing the method according to one of the preceding claims, characterized in that into the compression channel issue vacuum lines and that a hot gas station (55,84) is connected upstream of the melting channel (64) and that a dosing station (54) is provided.

16. Apparatus according to claim 15, characterized in that upstream of the melting means (53) is provided a compression station (51) with a common feed channel for the material to be processed.

17. Apparatus according to claim 16, characterized in that the compression station (51) has a compression channel (62), to which is connected the melting channel (64) of the melting means (53) and that at the end of the compression channel (62) remote from the transition point between the latter and the melting channel (64) is movably positioned a compression and feed plunger (63).

18. Apparatus according to claims 16 or 17, characterized in that the compression station (51) has a reception and precompression chamber (56), into which leads a feed channel (57) and in which is movably arranged a precompression plunger (59) in such a way that it presses the supplied material into an area (61) of the precompression chamber (56) overlapping the compression channel (62).

19. Apparatus according to one of the claims 15 to 18, characterized in that the melting channel (64) of the melting means (53) is surrounded by heating elements (66) over its entire length.

20. Apparatus according to one of the claims 18 and 19, characterized in that for avoiding the adhesion of the melt to the compression and feed plunger (63), cooling elements (81) are provided in the compression station (51).

21. Apparatus according to one of the claims 15 to 20, characterized in that the dosing station (54) has a dosing plunger (78) adjustable in its filling position.

22. Apparatus according to one of the claims 15 to 21, characterized in that separating means (72,73) are provided between the melting means (53) and the dosing station (54).

23. Apparatus according to claim 22, characterized in that the dosing station can be moved away from the melting means (53) by its dosing channel start (73) connected to the melting channel (64) and remote from its plunger (69).

24. Apparatus according to one of the claims 15 to 23, characterized in that vacuum lines issue into the compression channel (62).

25. Apparatus according to one of the claims 15 to 23, characterized in that a hot air station (55,84) is connected upstream of the melting channel (64).

26. Apparatus according to claim 25, characterized in that the feed channel for the product to be melted is surrounded by a metal filter through which hot gas can be blow radially through the channel and the fibrous product located therein.

27. Apparatus according to claim 25, characterized in that upstream of the hot gas station (83) is provided a feed opening (91) to the melting and dosing station.

28. Apparatus according to claim 27, characterized in that the hot gas station (83,84) has slide plungers (88) with openings (89) through which the hot gas can be blown axially into a hot chamber receiving a semifinished product (82).

## Revendications

1. Procédé pour la préparation de charges d'un matériau thermoplastique renforcé avec des fibres et déformable sous l'effet de la chaleur, prévues pour la fabrication d'articles moulés, une ébauche constituée de fibres et de liant (matrice) contenant de la matière thermoplastique étant tout d'abord précomprimée et rattachée à un boudin continu, chauffée au-delà du point de fusion de la matière thermoplastique, et une charge déterminée étant finalement séparée du boudin et amenée à un poste de traitement de charges, **caractérisé en ce** que l'ébauche précomprimée est chauffée sur tout son volume au moyen de gaz chaud.

2. Procédé selon la revendication 1, caractérisé en ce que l'ébauche est amenée par portions dont la grandeur ne correspond pas à la quantité de la charge adaptée à la pièce moulée à fabriquer.

3. Procédé selon l'une des revendications 1 à 2, caractérisé en ce que l'ébauche est amenée sous la forme de feutre du type ouate.

4. Procédé selon l'une des revendications 1 à 3, caractérisé en ce que l'ébauche est chauffée par le gaz chaud jusqu'au-delà du point de fusion de son polymère.

5. Procédé selon l'une des revendications 1 à 4, caractérisé en ce que l'ébauche est amenée sous forme d'ébauche versable.

6. Procédé selon l'une des revendications 1 à 5, caractérisé en ce que l'ébauche est amenée sous la forme de portions feutrées emballées dans des sachets réalisés à partir d'un matériau compatible avec la matière thermoplastique du liant, et notamment à partir du même matériau.

7. Procédé selon l'une des revendications 1 à 4, caractérisé en ce qu'il utilise des demi-produits précomprimés de forme stable.

8. Procédé selon la revendication 7, caractérisé en ce que le demi-produit est amené avec une enveloppe extérieure rigide constituée d'un mélange de polymère et de fibres fondu et resolidifié et avec un noyau intérieur constitué d'un mélange feutré de fibres, de polymère et de poudre.

9. Procédé selon l'une des revendications 7 ou 8, caractérisé en ce que le demi-produit est chauffé par du gaz chaud au moins dans la zone de son noyau fibreux.

10. Procédé selon la revendication 9, caractérisé en ce que le noyau du demi-produit est déjà chauffé par le gaz chaud jusqu'à 100°C au-delà de la température de fusion du polymère.

11. Procédé selon l'une des revendications 9 ou 10, caractérisé en ce que le gaz est soufflé axialement au travers du noyau feutré du demi-produit.

12. Procédé selon l'une des revendications 1 à 11, caractérisé en ce qu'il utilise comme gaz chaud un gaz inerte tel que l'azote ou l'hélium.

13. Procédé selon l'une des revendications 1 à 11, caractérisé en ce qu'il utilise comme gaz chaud de l'air chaud.

14. Procédé selon l'une des revendications précédentes, caractérisé en ce que les charges séparées du boudin sont dosées de manière volumétrique.

15. Dispositif pour la préparation de charges d'un matériau thermoplastique renforcé avec des fibres et déformable, prévues pour la fabrication d'articles moulés, comprenant un dispositif de fusion, une station de précompression, un canal de compression ainsi qu'un canal de fusion au travers duquel le matériau à traiter (57) est poussé sous la forme d'un boudin continu, en particulier pour la mise en oeuvre du procédé selon l'une des revendications précédentes, **caractérisé en ce** que dans le canal de compression débouchent des conduites à vide, qu'en amont du canal de fusion (64) est installée une station de gaz chaud (55, 84) et qu'il est prévu une station de dosage (54).

16. Dispositif selon la revendication 15, caractérisé en ce que le dispositif de fusion (53) est précédé d'une station de compression (51) avec un canal de transport commun pour le matériau à traiter.

17. Dispositif selon la revendication 16, caractérisé en ce que la station de compression (51) comprend un canal de compression (62) auquel fait suite le canal de fusion (64) du dispositif de fusion (53), et qu'à l'extrémité du canal de compression (62) opposée au point de transition entre le canal de compression (62) et le canal de fusion (64) est disposé de manière mobile un piston de compression et de refoulement (63).

18. Dispositif selon l'une des revendications 16 et 17, caractérisé en ce que la station de compression (51) comprend une chambre de réception et de précompression (56) dans laquelle débouche un canal d'alimentation (57) et dans laquelle un piston de précompression (59) peut être déplacé de telle façon qu'il pousse le matériau amené dans une zone (61) de la chambre de précompression (56) qui se chevauche avec le canal de compression (62).

19. Dispositif selon l'une des revendications 15 à 18, caractérisé en ce que le canal de fusion (64) du dispositif de fusion (53) est entouré sur toute sa longueur d'éléments de chauffage (66).

20. Dispositif selon l'une des revendications 18 à 19, caractérisé en ce que dans la station de compression (51) sont prévus des éléments de refroidissement (81) pour éviter l'adhésion de la masse fondue sur le piston de compression et de refoulement (63).

21. Dispositif selon l'une des revendications 15 à 20, caractérisé en ce que la station de dosage (54) comprend un piston de dosage (78) dont la position de remplissage est réglable.

22. Dispositif selon l'une des revendications 15 à 21, caractérisé en ce que des dispositifs de séparation (72, 73) sont prévus entre le dispositif de fusion (53) et la station de dosage (54).

23. Dispositif selon la revendication 22, caractérisé en ce que l'extrémité (73) du canal de dosage de la station de dosage opposée à son piston (69) et raccordée au canal de fusion (64) peut être éloignée du dispositif de fusion (53).

24. Dispositif selon l'une des revendications 15 à 23, caractérisé en ce que des conduites à vide débouchent dans le canal de compression (62).

**25.** Dispositif selon l'une des revendications 15 à 23, caractérisé en ce qu'une station d'air chaud (55, 84) est montée en amont du canal de fusion (64).

**26.** Dispositif selon la revendication 25, caractérisé en ce que le canal de transport pour le produit à fondre est entouré par un filtre métallique par lequel du gaz chaud peut être soufflé radialement au travers du canal et le produit fibreux placé dans celui-ci.

**27.** Dispositif selon la revendication 25, caractérisé en ce que la station de gaz chaud (83) est montée en amont d'une ouverture d'entrée (91) menant à la station de fusion et de dosage.

**28.** Dispositif selon la revendication 27, caractérisé en ce que la station de gaz chaud (83, 84) comprend des pistons-coulisses (88) avec des orifices (89) par lesquels du gaz chaud peut être soufflé axialement dans une chambre chaude recevant un demi-produit (82).

FIG. 1

EP 0 278 363 B1

12

Einfüllung vom "MART" Halbzeug

zum Schmelzkanal

Austritt des gasförmigen Mediums

Eintritt des erwärmten
gasförmigen Mediums

86
82
83
89
88
89
84
88
87

**FIG. 2**

EP 0 278 363 B1

FIG. 3

91 82 81a 66 72 73 74 76 71 77

2 3

63 82 52 61a 51 62 67 64 53 68 79 54 69 78

EP 0 278 363 B1